# EUROPEAN PATENT SPECIFICATION

(11) **EP 2 803 965 B1**
(45) Date of publication and mention of the grant of the patent: **03.08.2016**
(21) Application number: 14168078.5
(22) Date of filing: 13.05.2014
(51) Int. Cl.: G01L 5/28, B66F 7/28, G01M 17/007, B66F 7/06

(54) **Improved testbench for land vehicles**
Verbesserter Prüfstand für Landfahrzeuge
Banc d'essai amélioré pour véhicules terrestres

(30) Priority: 13.05.2013 IT VA20130018 U
(43) Date of publication of application: 19.11.2014
(73) Proprietor: Vamag S.r.l., 21012 Cassano Magnago (VA) (IT)
(72) Inventor: Crosta, Gianfranco, 21012 CASSANO MAGNAGO VA (IT)
(74) Representative: Faggioni, Carlo Maria

(56) References cited:
- EP-A1- 1 788 374
- DE-A1- 1 781 229
- DE-A1- 2 811 077
- DE-U1- 20 313 957
- GB-A- 453 656

## Description

### FIELD OF THE INVENTION

The present invention relates to the field of test benches for motor vehicles, in particular brake and speed test benches.

### STATE OF THE PRIOR ART

As known, all wheel-equipped land vehicles undergo efficiency tests with a certain frequency. Both when the vehicle is new, during the testing phase, and in the course of its operating life, during servicing, the need exists to perform tests relating to the vehicle wheels (motor vehicles, lorries, motorbikes, quads, ...), which tests are typically carried out in a suitably equipped workshop.

These tests are carried out employing suitable test benches on the floor, which are arranged and provided with sensors for detecting the dynamic and static loads of the wheels and thus derive a series of useful data for understanding the condition of the vehicle. Typically, these tests relate to the calibration of the speed probe and the efficiency of the braking system.

Test benches are provided with rotating rollers or floating/oscillating plates which are sensitive to the stresses transmitted by the wheels and can provide a useful signal for obtaining the desired information. Typical examples of roller test benches are speed test benches (for example the model VELO 40/A manufactured by Vamag Srl) or brake testers (for example model RBT3500 manufactured by Vamag Srl), while plate test benches are some load-cell brake test benches (for example model 4PLD A/M manufactured by Vamag Srl).

In any case, according to the prior art, these test benches consist of a containment frame, which defines a reference top plane (the one which typically remains flush with the road surface), within which leverages, any rollers and the plates, as well as the load sensors, are mounted. For installation in a workshop, it is sufficient to prepare a foundation of the correct size, possibly within a suitable recess in the concrete basement of the workshop, into which the test bench is easily lowered and fastened, taking then care to connect the electric (supply and/or data transmission) equipment to an electric control cabinet.

The test bench, per se, does not normally occupy much space, but requires a significant work area (where the vehicle is stationed) and respect area (to allow the vehicle to be manoeuvred).

Since in a workshop other apparatuses are normally also installed (machine tools, one or more rising ramps, inspection pits, and so on), overall space requirement becomes demanding and expensive.

DE 20313957 and GB453656A disclose exemplifying rising ramps installed in car workshops. DE 2811077 A and DE 1781229 A disclose similar equipment where some driven rollers are embedded. A wheel alignment angle measuring apparatus is disclosed in EP1788374.

### SUMMARY OF THE INVENTION

The problem at the base of the invention is hence that of providing a test bench which has a minimum impact on the space occupation in a workshop, where other equipment must already be installed, in particular a rising ramp.

Such object is achieved through a piece of equipment as described, in its essential features, in the main claim here attached. The dependent claims relate to preferred features and particularly advantageous features of the invention.

In particular, according to a first aspect of the invention, it is provided a testing and checking equipment for land vehicles, comprising a containment frame of at least a test bench acting by contact with wheels of the vehicles, provided on upper side with force-sensitive means and, internally, with transmission means to transfer stresses to force translation means in the form of force sensors, wherein said containment frame is integral with a horizontal structure of a vehicle lifting frame of a lifting system installed on ground.

Preferably, said containment frame is only a portion of said horizontal structure of the lifting frame. Moreover, said containment frame is a main portion of said horizontal structure of the lifting frame, with which force sensors in the form of load cells are made integral and said force-sensitive means are in the form of measuring plates fastened to said force sensors.

According to another aspect, consolidation means are further provided between said horizontal structure of the lifting frame and a foundation basement, to stabilise said horizontal structure of the lifting frame in a lowered attitude where said force-sensitive means are close to a floor level.

### BRIEF DESCRIPTION OF THE DRAWINGS

Further features and advantages of the invention will in any case become more evident from the following detailed description, supplied as a non-limiting example and illustrated in the attached drawings, wherein:
fig. 1 is a side elevation view, partly in section, of a test bench according to the invention;
fig. 2 is a top plan view of the test bench of fig. 1;
figs. 3A and 3B are longitudinal and transversal section views, respectively, of the test bench of fig. 2 in a recessed position;
figs. 4A and 4B are side elevation and top plan views, respectively, of an example of a test bench; and
fig. 5 is a view similar to that of fig. 4A of a further embodiment of the invention.

### DETAILED DESCRIPTION OF A PREFERRED EMBODIMENT

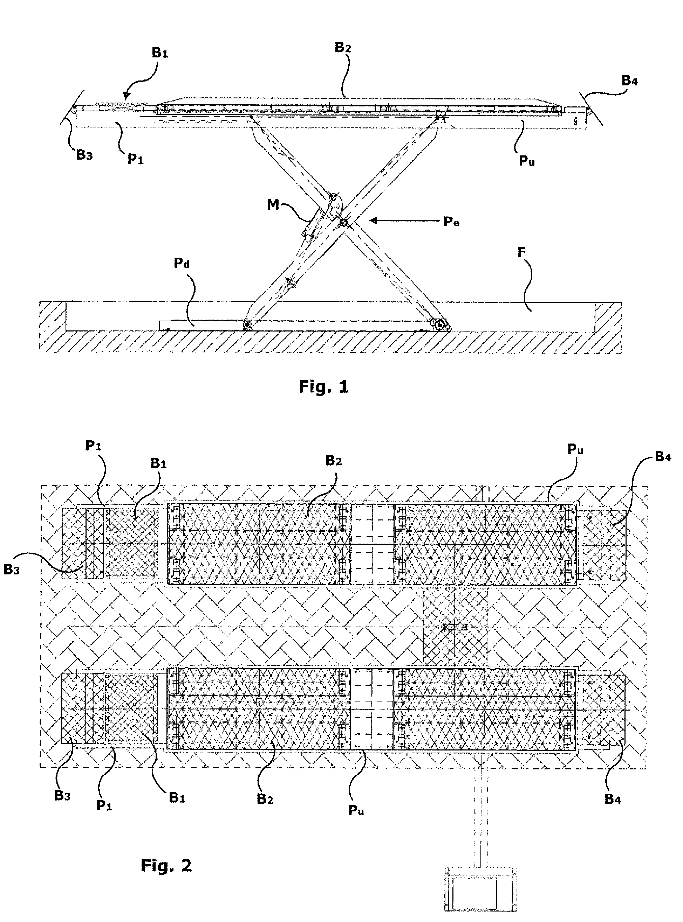

In figs. 1-3B an improved test bench is illustrated according to the invention, in particular a brake test bench.

In a way known per se, a test bench B consists of a containment frame, provided with a top reference plane on which the tyres of a vehicle (undergoing a test) are meant to travel, within which leverages and connection transmissions between upper rollers and/or contact plates and load sensors are mounted. The rollers and/or contact plates - which make up the means of acquisition of the forces - are arranged in the upper part of the test bench (so that the tyres may rest on top during the test) and are mounted with a certain slack (or even with a complex degree of freedom, as in the case of the rotating rollers) with respect to the containment frame.

The load sensors - which make up the translation means of the forces - are typically in the form of load cells, suited to issue an electric signal depending on the stresses detected through the plates and/or contact rollers. The electric signals relating to the forces are obtained, for example, through the use of extensometers (applying the stress/deformation laws of known materials) and are then sent (via cable or wirelessly) to a monitoring and control unit, which processes the signals and supplies the data to the operator on a display or other output device.

The force-acquisition and force-translation means will not be further described here, as they are widely known in the art.

According to an essential feature of the invention, the containment frame of test bench B is embedded and integral with the frame of a vehicle rising lift or ramp P, which it is a part of. In particular, the containment frame of test bench B defines at least a portion of one of two horizontal structures Pᵤ or P_{d} of the lifting frame a vehicle rising lift/ramp installed on a ground. Said rising ramp, as a matter of fact, comprises a frame provided with a first horizontal basement structure P_{d} and with a second horizontal lifting structure Pᵤ, between which motorised lifting means Pₗ are arranged.

The horizontal basement structure P_{d} of the frame is meant to be installed and fastened to the foundation floor of a workshop, preferably but not necessarily in correspondence of an inspection pit which allows to arrange the walkable plane of the upper horizontal structure Pᵤ at the level of the workshop floor.

In order to favour accessibility below the vehicle (when it is in a raised position on the rising ramp), preferably both the horizontal lifting structure Pᵤ and the motorised lifting means Pₗ are divided into two identical units, mounted mutually parallel and spaced by a measure substantially equivalent to that of the axle track between the wheels of the vehicles to be lifted.

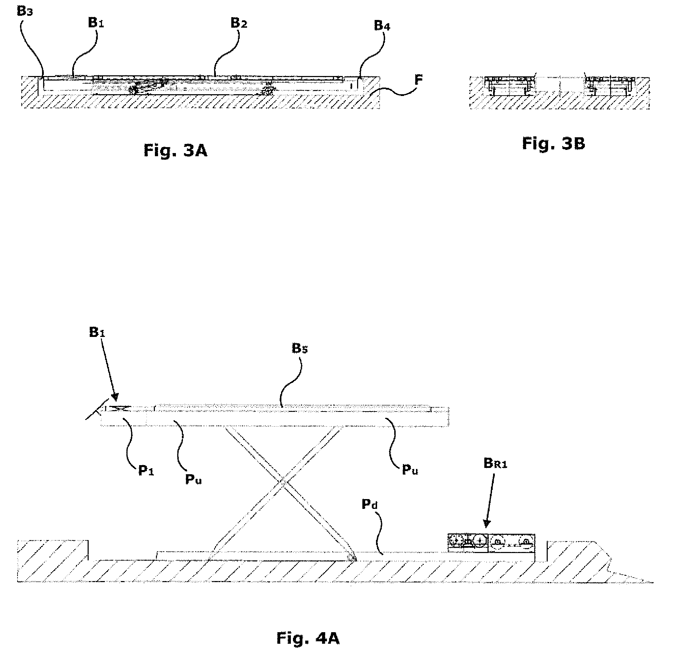

Fig. 1 shows a first embodiment of the device according to the invention, wherein test bench B has a containment frame which coincides with a significant portion of the upper horizontal structure Pᵤ of a frame of a rising ramp. In embodiment shown, the horizontal basement structure Pd is installed fixed within an inspection pit or foundation F in the workshop floor. The lifting means have a conventional articulated-parallelogram structure, provided with two pairs of X-shaped, hinged spiders (also called "twin scissors"), one for each of the two parallel units (see also fig. 2 and 3B). The articulated-parallelogram configuration allows to lift upper horizontal structure Pᵤ easily maintaining it in a state parallel to the floor plane. The scissors-like rods of lifting means Pₗ are mutually closed or opened through a (electric, hydraulic, pneumatic, ...) drive member M which allows the spreading apart thereof (up to the raised attitude, as shown in fig. 1) or the folding on themselves (down to the lowered collapsed attitude, shown in fig. 3A).

In the embodiment shown in fig. 2, test bench B is of the plate type, as can be appreciated from the element marked by B₂. The two upper horizontal structures Pᵤ, belonging to the two units into which the rising ramp of fig. 2 is divided, are identical and are mounted on the respective scissors-like lifting means at a short mutual distance (typically the distance between the two longitudinal axes is of about 1540 mm). Each one of the two upper horizontal frame structures Pᵤ is completed on the upper side by the measuring plate B₂ of the test bench (for the main portion Pᵤ) and by a further slack test plate B₁ (for the remaining terminal portion P₁). Preferably, at the two terminal ends, each one of the two upper horizontal structures Pᵤ is provided with pivoting connection plates B₃ and B₄ which overlap the perimeter line of the foundation (fig. 3A), so as to allow a smooth travel of the vehicle wheels from the floor to the rising ramp. Terminal plates B₃ and B₄ are pivoting around a pivot arranged at the end edge of horizontal structure Pᵤ and their centre of gravity is displaced outside the horizontal structure Pᵤ: this unbalance arrangement gives rise to a tilted attitude when contact with the floor is lost; when they are in said tilted attitude (fig. 1) plates B₃ and B₄ also act as a safety stop for the vehicle wheels.

The equipment according to the invention thus advantageously has a twofold function, despite keeping the typical bulk and the installation burdens of a simple rising ramp. The upper horizontal structure/s may be employed in a conventional manner for the lifting of a vehicle (typically to be able to operate with maintenance actions from below the vehicle); at the same time, when the upper horizontal structure Pᵤ is fully lowered (fig. 3A), test bench B remains arranged flush with the floor, so that it can be used for the required tests (speed or braking), with no limitations whatsoever.

In order to fully rule out the event of the oscillations of the ramp structure invalidating or distorting the detection of the forces transmitted to the test bench, auxiliary consolidation means are preferably provided which can be operated during the tests at the test bench. For example, the auxiliary consolidation means (not shown) can be in the form of clamps or pegs which further constrain the containment frame of the test bench to foundations F or to the workshop floor, when said frame is in the lowered condition where force sensitive means (like plates and rollers) are kept at floor level.

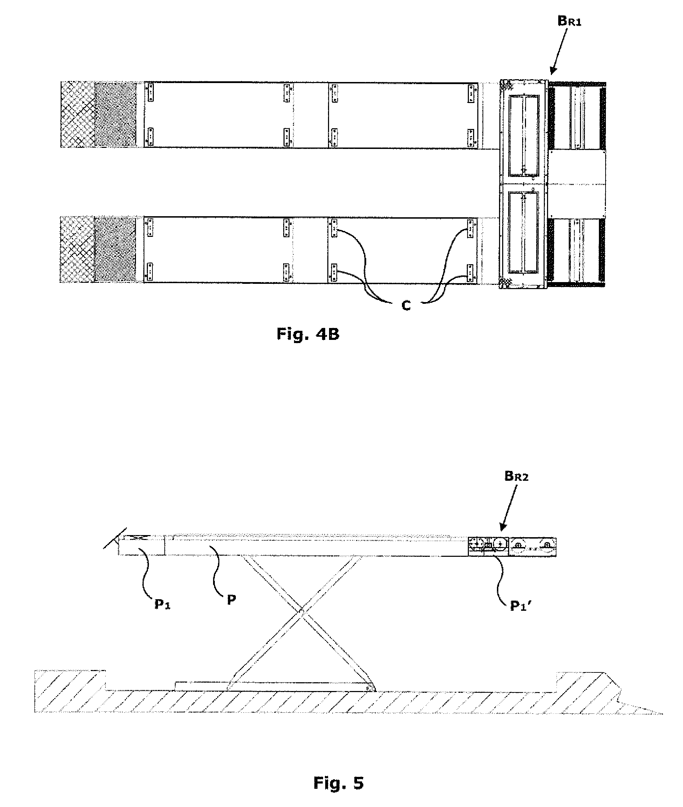

Figs. 4A and 4B show a configuration fully similar to the preceding one wherein, in addition to plate test bench B - embedded in the portion Pᵤ of the upper horizontal structure of the frame - a further (twin) test bench is provided with rollers B_{R1}, the containment frame of which is part of the horizontal basement structure P_{d} of the rising ramp. The roller test bench B_{R1} can be employed as a brake or speed test bench.

Fig. 4B shows a further configuration in which the test bench occupies almost entirely the length of the rising ramp (for the sake of clarity measuring plates have been removed). Since on horizontal lifting structure Pᵤ floating/fixed measuring plates B₅ are not shown (visible instead in fig. 4A) for each ramp unit, four load cells C are visible by which each plate B₅ is intended to be constrained to its containment frame (that is, structure Pᵤ). Measuring plates B₅ are suited to transfer the braking stress of the above-lying vehicle wheels to load cells C, so as to have the electric signal suitable for providing the desired information on the stresses transferred by the vehicle to the structure of the containment frame.

Finally, fig. 5 shows a further embodiment, in which a (twin) roller test bench B_{R2} is embedded at the other end of the upper frame structure Pᵤ of the same rising ramp, with respect to the end in which the first plate test bench B is embedded. Roller test bench B_{R2} can be employed either as a brake or as a speed test bench.

As can be understood from what has been described above, the testing equipment according to the invention allows to perfectly achieve the objects set forth in the preliminary remarks.

As a matter of fact, the elements making up the test bench are perfectly embedded in a containment frame which is part of a rising lift/ramp, which fully removes the bulk typical of the test bench with respect to that of the rising lift/ramp, also necessary in a workshop. The footprint and respect areas of the test bench coincide with those of the rising lift/ramp, with remarkable savings of the occupied area in the workshop. Finally, the embedding of the test bench in the rising lift/ramp fully removes test bench installation costs in addition to those of the lift/ramp, the data and electric supply lines also being able to be embedded one into the other.

It is understood that the scope of the invention described above is not limited to the embodiments shown, but extends to any other equivalent construction within the scope of the attached claims.

For example, although the motorised lifting means have been illustrated in the form of scissors-like articulated rods, a similar function may be achieved with a lifting system having rising posts (typically four lifting posts synchronised at the four vertexes).

## Claims

1. Testing and checking equipment for land vehicles, comprising a containment frame of at least a test bench (B, B_{R2}) acting by contact with wheels of the vehicles, provided on upper side with force-sensitive means and, internally, with transmission means to transfer stresses to force translation means in the form of force sensors, wherein said containment frame is integral with a horizontal structure of a vehicle lifting frame (Pᵤ) of a lifting system installed on ground,
wherein said containment frame is a main portion of said horizontal structure of the lifting frame (Pᵤ), with which force sensors in the form of load cells (C) are made integral, **characterized in that**
said a force-sensitive means are the form of measuring places (B₁, B₅) fastened to said force sensor,
consolidation means are further provided between said horizontal structure of the lifting frame (Pᵤ) and a foundation basement, to stabilise said horizontal structure of the lifting frame (Pᵤ) in a lowered attitude where said force-sensitive means are close to a floor level
and test bench (B) remains arranged a flush with said floor, so that it can be used for required, speed or braking tests.

2. Equipment as claimed in 1, wherein said containment frame is only a portion of said horizontal structure of the lifting frame (Pᵤ).

## Patentansprüche

1. Test- und Prüfvorrichtung für Landfahrzeuge, umfassend einen Aufnahmerahmen von mindestens einem Prüfstand (B, B_{R2}), der durch Kontakt mit Rädern der Fahrzeuge tätig wird, auf einer oberen Seite mit kraftempfindlichen Mitteln, und, intern, mit Übertragungsmitteln zum Übertragen von Belastungen auf Kraftumwandlungsmittel in Form von Kraftsensoren versehen, wobei der Aufnahmerahmen mit einer horizontalen Struktur eines Fahrzeughubgestells (Pᵤ) eines auf dem Boden installierten Hubsystems integral ausgebildet ist,
wobei der Aufnahmerahmen ein Hauptteil der horizontalen Struktur des Hubgestells (Pᵤ) ist, mit dem Kraftsensoren in Form von Druckmessdosen (C) integral ausgebildet sind, **dadurch gekennzeichnet, dass**
die kraftempfindlichen Mittel in Form von an den Kraftsensoren befestigten Messplatten (B₁, B₅) vorliegen,
ferner Bindungsmittel zwischen der horizontalen Struktur des Hubgestells (Pᵤ) und einer Unterbaustruktur vorgesehen sind, um die horizontale Struktur des Hubgestells (Pᵤ) in einer tieferen Stellung zu stabilisieren, in der sich die kraftempfindlichen Mittel in Bodennähe befinden und der Prüfstand (B) mit dem Boden bündig bleibt, sodass er für gewünschte Geschwindigkeits- oder Bremstests verwendet werden kann.

2. Vorrichtung nach Anspruch 1, wobei der Aufnahmerahmen nur ein Teil der horizontalen Struktur des Hubgestells (Pᵤ) ist.

## Revendications

1. Equipement d'essai et de contrôle pour véhicules terrestres, comprenant un bâti de confinement d'au moins un banc d'essai (B, B_{R2}) agissant par contact avec les roues des véhicules, prévu sur un côté supérieur avec des moyens sensibles à la force et, intérieurement, avec des moyens de transmission pour transférer les tensions aux moyens de translation de force sous la forme de capteurs de force, dans lequel ledit bâti de confinement est solidaire avec une structure horizontale d'un bâti de levage de véhicule (Pu) d'un système de levage installé sur le sol,
dans lequel ledit bâti de confinement est une partie principale de ladite structure horizontale du bâti de levage (Pᵤ), avec lequel les capteurs de force se présentant sous la forme de cellules de charge (C) sont rendus solidaires, **caractérisé en ce que** :
lesdits moyens sensibles à la force se présentent sous la forme de plaques de mesure (B₁, B₅) fixées auxdits capteurs de force,
on prévoit en outre des moyens de consolidation entre ladite structure horizontale du bâti de levage (Pu) et une base de fondation, afin de stabiliser ladite structure horizontale du bâti de levage (Pu) dans une attitude abaissée où lesdits moyens sensibles à la force sont proches du niveau du sol,
et le banc d'essai (B) reste agencé de niveau avec ledit sol, de sorte qu'il peut être utilisé pour les essais de vitesse ou de freinage requis.

2. Equipement selon la revendication 1, dans lequel ledit bâti de confinement est uniquement une partie de ladite structure horizontale du bâti de levage (Pᵤ).
